# EUROPEAN PATENT SPECIFICATION

(11) **EP 0 677 711 B1**
(45) Date of publication and mention of the grant of the patent: **29.12.1999**
(21) Application number: 95104804.0
(22) Date of filing: 31.03.1995
(51) Int. Cl.: F25C 1/14, B23P 15/26, B21C 37/26

(54) **Freezing drum and method and device for the manufacture of the same**
Gefriertrommel sowie Verfahren und Vorrichtung zur Herstellung derselben
Tambour de congélation ainsi que procédé et dispositif de fabrication d'un tel tambour

(30) Priority: 14.04.1994 IT MI940700
(43) Date of publication of application: 18.10.1995
(73) Proprietor: Officina Meccanica G.R.B. di Grotti Renzo & C. S.n.c., 40013 Castelmaggiore (BO) (IT)
(72) Inventor: Grotti, Renzo, I-40141 Bologna (IT)
(74) Representative: Marietti, Giuseppe

(56) References cited:
- EP-A- 0 303 074
- EP-A- 0 519 252
- US-A- 4 514 900
- US-A- 4 991 407
- PATENT ABSTRACTS OF JAPAN vol. 008 no. 191 (M-322) ,4 September 1984 & JP-A-59 081494 (UCHIYAMA SHIYOUKAI:KK) 11 May 1984,
- PATENT ABSTRACTS OF JAPAN vol. 008 no. 020 (M-271) ,27 January 1984 & JP-A-58 179512 (MITSUBISHI JUKOGYO KK;OTHERS: 01) 20 October 1983,

## Description

The present invention concerns in general the manufacture of freezing drums with built-in evaporator.

In particular, the invention concerns a method and a device for the manufacture of a freezing drum with built-in evaporator as well as a freezing drum thus obtained.

Such a freezing drum is particularly suitable to be used in machines for foodstuff processing, for instance in machines for the production of ice-cream, water-ice, shakes and the like.

Different examples of freezing drums of the type with built-in evaporator are already known in the technique and they have allowed to obtain improvements in performance versus previous freezing drums wherein the evaporator was constituted by a cooling coil wound up tightly in contact with the external wall of the freezing chamber.

However the manufacture of freezing drums with built-in evaporator according to currently known techniques often proved to be difficult and hardly convenient from the economic point of view.

An example of a similar freezing drum is described in the European patent application EP 519252 concerning a freezing drum with built-in evaporator that includes a couple of tubular metal elements, coaxially positioned inside one another, and a helical-shaped metal strip with an edge inserted into a corresponding helical groove provided on the external surface of the inner tubular element, whereas the opposite edge of the strip is put tightly in contact with the internal surface of the outer tubular element. The welding of an annular flange to each end allows to seal the hollow space between the two tubular elements.

Nevertheless the method described in said european patent application involves several inconveniences. First of all, the internal tubular element, namely the freezing chamber, must be provided with sufficient thickness to allow the formation of the groove though maintaining the characteristics of mechanical resistance necessary to support the stresses transmitted by the moving members inside the chamber itself, for instance stirrers and/or scrapers. This involves the use of chambers with considerable thickness and consequently jeopardizes the efficiency of thermal exchange between the product contained in the freezing chamber and the fluid of thermal exchange circulating in the evaporator.

Moreover the formation of the groove on the freezing chamber requires high manufacturing precision, which affects production times and makes the method little suitable to be applied to mass production. Further complications may arise if the method has to be used in productions of different type, for example the realisation of helical paths with two or more starts, which involve the formation of two or more grooves.

It is also evident that the several welding operations to fix the annular flanges with the side surface of the freezing chamber may cause localised modifications of the internal structure of materials and in this case require further treatments of thermal type of the already assembled unit.

In general the currently known methods also envisage that the strip be preshaped according to the helical configuration before it is positioned onto the chamber. It is therefore necessary to keep in stock semi-finished products of different type, namely preshaped strips with sections of different size or with different pitch and angle of the spiral, to be able to meet different production requirements. Besides jeopardizing the flexibility of production, the known methods unavoidably involve additional costs to keep the necessary stock of semi-finished products.

An object of the present invention is that of envisaging a method that allows to simplify the mass production of freezing drums with built-in evaporator and make it more flexible independently of their different characteristics. Another object of the present invention is that of envisaging a method that allows to obtain a freezing drum having a high efficiency of thermal exchange between the product contained therein and the fluid of thermal exchange circulating in the evaporator.

Still another object of the present invention is that of envisaging a quick and economic method for the mass production of freezing drums with built-in evaporator.

A futher object of the present invention is that of envisaging a method for the manufacture of a freezing drum that allows to limit the welding operations on the side surface of the freezing chamber to the strictly necessary number.

These objects are achieved by the present invention that concerns a method for the manufacture of a freezing drum with built-in evaporator, said freezing drum comprising a substantially cylindrical external jacket made of metal, a cylindrical freezing chamber, made of metal as well, having lower diameter than said external jacket and positioned inside said jacket in coaxial position therewith, as well as at least a helical-shaped path provided in the hollow space existing between said jacket and said chamber, characterized by the steps of :
- providing a flange at one end of the cylindrical freezing chamber by roller leveling said chamber;
- winding up of at least a metal strip on said chamber by deformation of said strip from a substantially rectilinear configuration to a helical configuration, driving an edge of said strip into tight contact with the ungrooved external surface of said chamber; and
- arranging said external jacket, thermally dilated, on the chamber-strip assembly to obtain, once cooling has occurred, the fixing of said strip between the external surface of said chamber and the internal surface of said jacket.

The strip is deformed in a way that it acquires the desired configuration on the external surface of the chamber, thus resulting steadily fixed thereon.

Furthermore the homogeneous and regular stretching of the strip on the chamber provides the assembly with a considerable stiffness.

The formation of one or more grooves on the external surface of the chamber is also avoided with consequent simplification of processing operations and reduction of production times and costs. As a matter of fact the problem of keeping semi-finished products in stock is eliminated since the strip is directly shaped during its winding up onto the chamber.

The absence of grooves also allows to use freezing chambers having reduced thickness with consequent improvement of the efficiency of thermal exchange between the product contained in the chamber and the fluid of thermal exchange circulating in the evaporator.

Before starting the operation of winding the strip on the chamber, one edge of the strip is rested on the surface of the chamber in the vicinity of the flange and can be fixed by a welding spot between the strip edge and the external surface of the chamber.

Alternatively, the strip can be fixed directly to the flange by means of a welding spot between the strip end and the flange surface.

At the end of the winding operation the strip is fixed by means of a welding spot to the external surface of the chamber in the vicinity of the end opposite to the one provided with flange.

The welding spots necessary to ensure the strip to be fixed to the chamber are thus reduced (maximum two).

A further solution that allows to limit welding operations is provided by the fact that the flange is obtained by roller leveling one of the chamber ends. In this way the welding of a different annular flange onto the side surface of the chamber is avoided.

The invention also concerns a freezing drum, of the type with built-in evaporator, comprising a substantially cylindrical external jacket made of metal, a cylindrical freezing chamber, made of metal as well, having a lower diameter than said external jacket and housed inside said jacket in coaxial position, a flange positioned at one end of said chamber, as well as at least a helical-shaped path provided in the hollow space between said jacket and said chamber, characterized in that said chamber and said flange are a single piece and that said helical-shaped path is defined by at least a metal strip wound up on the ungrooved external surface of said chamber with one edge tightly in contact therewith and with the opposite edge tightly in contact with the internal surface of said jacket.

The present invention also concerns a device for the manufacture of a freezing drum with built-in evaporator according to the aforedescribed method, as defined in claim 15.

Further advantages of the invention will become more evident from the following description, given by way of illustration and with no limiting purposes, with reference to the accompanying drawings, where:
- figure 1 is a side view, partially in section, of a freezing drum with built-in evaporator according to the present invention;
- figure 2 is a side view of the freezing chamber, with the strip wound thereon, according to a possible embodiment of the present invention;
- figure 3 is a side view of the freezing chamber, with the strip wound thereon, according to another embodiment of the invention;
- figure 4 is a schematic view of a device for the application of the strip onto the freezing chamber according to the invention;
- figure 5 is a plan schematic view of a detail of the device of figure 4; and
- figure 6 is a side schematic view of the detail of figure 5.

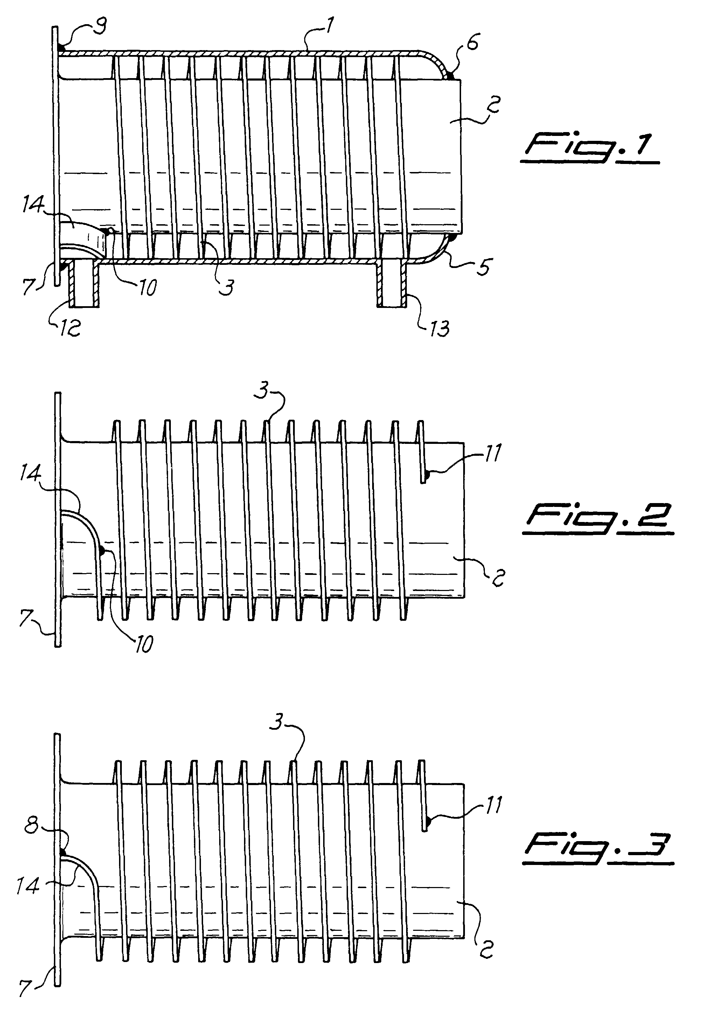

Figure 1 shows a freezing drum with built-in evaporator comprising an external jacket 1, a freezing chamber 2 housed inside the jacket 1 in coaxial position therewith and a helical path obtained by means of a strip 3 tightly wound on the external surface of the chamber 2 in the hollow space between the jacket 1 and the chamber 2.

The built-in evaporator in the freezing drum is therefore constituted by at least a helical path defined by the internal surface of the jacket 1, by the external surface of the chamber 2 and by the strip 3 kept tightly in contact between said surfaces.

Of course it is possible to realize two or even more helical paths (realizations with two or more starts) by winding onto the chamber 2 other strips arranged parallely to each other.

Preferably the chamber 2 is made of stainless steel, whereas the jacket 1 and the strip 3 are made of soft iron.

The front end of the hollow space is sealed by welding along the continuous line 9 between the end edge of the jacket 1 and the flange 7. The latter is preferably obtained on the chamber 2 by roller leveling, thus avoiding another welding operation on the chamber to fix a different annular flange, as it occurred in the embodiments of the known technique, and moreover allowing to perform the welding 9 on the surface of the flange 7 without involving the cylindrical surface of the chamber 2.

The end portion 5 of the jacket 1 has an axial section having a diameter decreasing down to a value equal or slightly higher than the external diameter of the chamber 2. This allows to seal the hollow space between the jacket 1 and the chamber 2 at its bottom end by means of a continuous welding line 6 between the edge of the portion 5 and the external surface of the chamber 2.

Furthermore on the jacket 1 at least a couple of manifolds 12 and 13 is provided for the fluid of thermal exchange to flow in and out, for instance freon, that circulates within the hollow space.

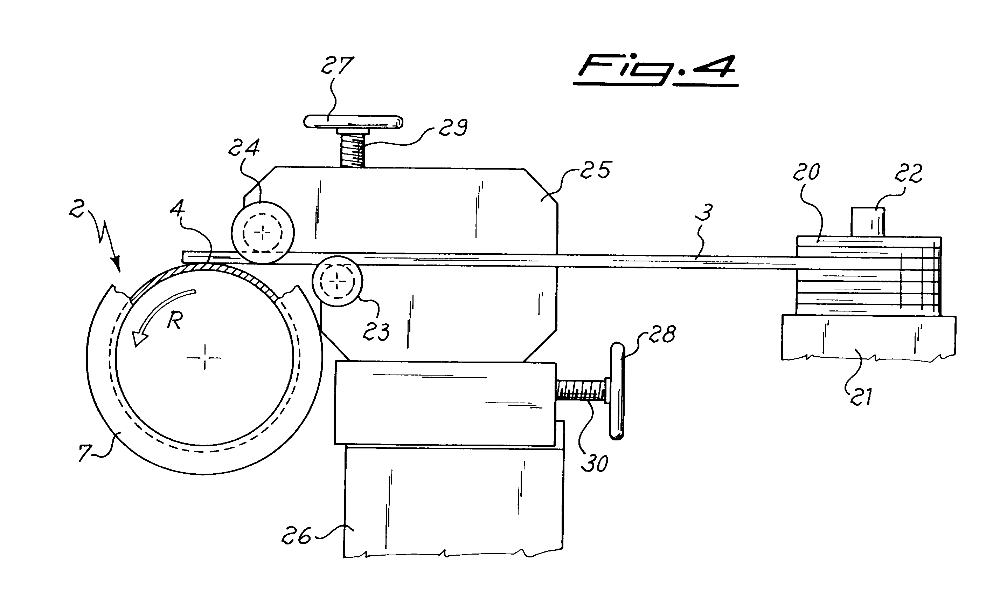

In the embodiment shown in figures 1 and 2, the strip 3 is fixed to the chamber 2 in the vicinity of the flange 7 by a welding spot 10. The latter is necessary to fix the strip with one of its edges against the surface of the chamber 2 at the beginning of the winding operation. The end portion 14 of the strip 3 is bent towards the flange with its end in contact with the flange itself in order to allow to close the evaporator circuit in correspondence to the manifold 12.

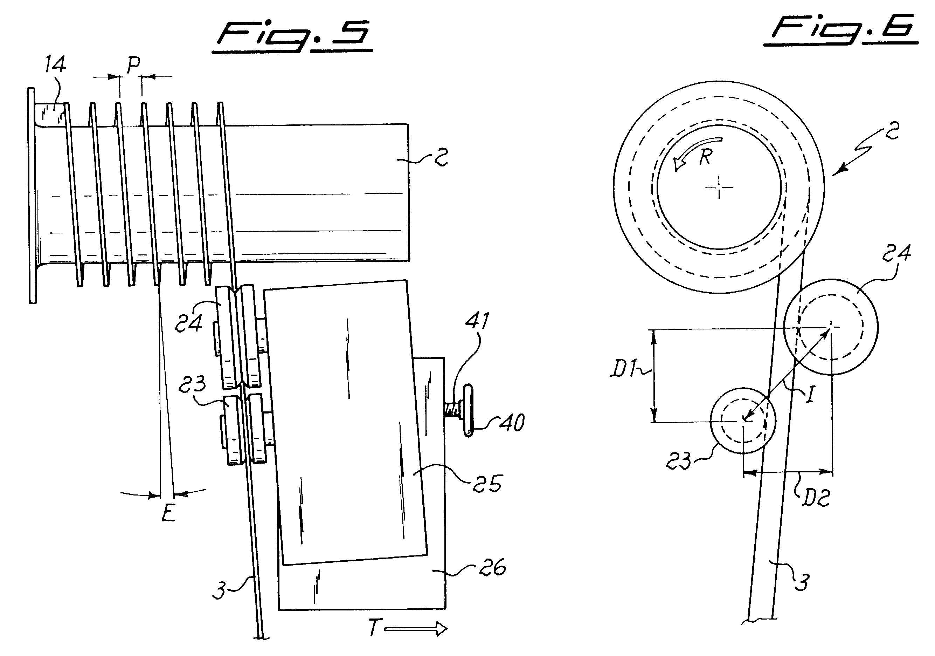

Alternatively, as shown in figure 3, the strip 3 is fixed in correspondence to its end to the flange 7 by a welding spot 8 and the end portion 14 is bent to allow the correct alignment of the strip 3 with the winding direction. In this case the thermal stress due to welding does not affect the side surface of the chamber 2.

The strip 3 is also fixed to the chamber 2 by means of a welding spot 11 in the vicinity of the opposite side of the chamber 2 in respect to the one provided with flange. According to a possible embodiment of the invention the external surface of the freezing chamber 2 has lumpy or roughly machined external surface.

In particular the surface roughness can be obtained by plastic machining of the surface, for instance by knurling, or by chip removal machining, for example quick turning. This causes a certain turbulence in the fluid circulating in the evaporator and considerably increases the surface of the chamber 2 involved in the thermal exchange thus allowing to improve the efficiency of thermal exchange of the freezing drum.

Moreover it is evident that the winding of the strip 3 tightly in contact with the external surface of the chamber 2 allows to adapt the contact edge of the strip 3 to the superficial roughness of the chamber 2.

Figure 4 schematically shows a device for the manufacture of a freezing drum with built-in evaporator according to the method of the present invention.

The freezing chamber 2 is held on means (not shown) that make the chamber itself rotate around its own axis in the direction indicated by the arrow R. The metal strip 3 is drawn from a roll 20 resting on a supporting block 21 and inserted into a dowel 22.

The strip 3 drawn from the roll 20 is driven through a couple of rollers 23 and 24 that allow the stretching of the strip 3 on the chamber 2, deforming it from its substantially rectilinear configuration to make it adapt to the configuration of the external surface of the chamber 2. In particular, the strip 3 is driven with one edge in contact with the grooved bottom of the roller 23, while the grooved roller 24, acting on the opposite edge of the strip 3, exerts on the strip 3 the necessary pressure to obtain its deformation in correspondence to the surface of the chamber 2. The roller 23 acts therefore as fulcrum for the strip 3 that is submitted to the action of the roller 24 in a point between the fulcrum point on the grooved roller 23 and the contact point 4 of the strip 3 on the chamber 2.

The grooved rollers 23, 24 are positioned, with their axes reciprocally parallel, on a head 25 mounted on its turn on a block 26 movable along a direction parallel to the axis of the chamber 2 (arrow T in figure 5) with speed synchronized with the speed of rotation of the chamber itself. The translation movement of the block 26, and consequently of the head 25, together with the rotation movement of the chamber 2 allow to obtain the winding of the strip 3 onto the chamber.

The speed of translation of the movable block 26 may of course be varied in respect to the speed of rotation of the chamber 2 by using for example gear devices at variable ratio to obtain the winding of desired pitch.

The head 25 may be adjusted in height in respect to the movable block 26 by acting on a handwheel 27 connected to a threaded pin 29, while the distance between the head 25 and the chamber 2 may be adjusted by means of a handwheel 28 connected to a corresponding threaded pin 30.

Now with reference to figure 5, the orientation of the head 25 in respect to the movable block 26 may be varied by acting on a handwheel 40 connected to a threaded pin 41 to keep the correct alignement of the strip 3 in respect to the chamber 2 as a function of the pitch P. The angle of the helix E depends on the selected pitch P, on the number of different windings (starts) and on the geometrical characteristics of the chamber 2 and the strip 3.

The pressure action exerted by the roller 24 may be adjusted by simply acting on the relative distance between the axes of the rollers 23 and 24.

As shown in figure 6, the distance between centres I is preferably varied by translating at least one of the rollers, for instance roller 23, along two mutually perpendicular directions D1, D2 in a way to vary the position of the "fulcrum" in respect to the point in which the roller 24 exerts its pressure action. The possible adjustment of the distance between the roller 24 and the contact point 4 of the strip 3 on the chamber 2 can therefore be obtained by moving the head 25 acting on the handwheel 28 (figure 4).

## Claims

1. A method for the manufacture of a freezing drum with built-in evaporator, said freezing drum comprising a substantially cylindrical external jacket (1) made of metal, a cylindrical freezing chamber (2), made of metal as well, having a lower diameter than said external jacket (1) and housed inside said jacket in coaxial position, as well as at least a helical path provided in the hollow space between said jacket (1) and said chamber (2), characterised by the steps of:
- providing a flange (7) at one end of the cylindrical freezing chamber (2) by roller leveling said chamber (2);
- winding up at least a metal strip (3) on said chamber (2) by deformation of said strip from a substantially rectilinear configuration to a helical configuration, driving one edge of said strip (3) into tight contact with the ungrooved external surface of said chamber (2); and
- arranging said external jacket (1), thermally dilated, on the chamber-strip assembly to obtain, once cooling has occurred, the fixing of said strip (3) between the external surface of said chamber (2) and the internal surface of said jacket (1).

2. A method according to claim 1, characterised in that said strip (3), before its winding, is fixed to said chamber (2) in the vicinity of said flange (7) by means of at least a welding spot (10) between the edge of said strip (3) and the external surface of said chamber (2).

3. A method according to claim 1, characterised in that said strip (3), before its winding, is fixed to said flange (7) by means of at least a welding spot (8) between the end of said strip (3) and the surface of said flange (7).

4. A method according to any of the preceding claims, characterised in that said strip (3), at the end of the winding operation, is fixed by means of at least a welding spot (11) to the external surface of said chamber (2) in the vicinity of the opposite end to the one provided with flange (7).

5. A method according to any of the preceding claims, characterised in that it comprises a rough machining of the external surface of said chamber (2) before the winding of said strip (3).

6. A method according to claim 5, characterised in that said machining is a knurling or quick turning operation.

7. A freezing drum, of the type with built-in evaporator, comprising a substantially cylindrical external jacket (1) made of metal, a cylindrical freezing chamber (2), made of metal as well, having a lower diameter than said external jacket (1) and housed inside said jacket in coaxial position, a flange (7) positioned at one end of said chamber (2), as well as at least a helical-shaped path provided in the hollow space between said jacket (1) and said chamber (2), characterised in that said chamber (2) and said flange (7) are a single piece and that said helical-shaped path is defined by at least a metal strip (3) wound on the ungrooved external surface of said chamber (2) with one edge tightly in contact therewith and the opposite edge tightly in contact with the internal surface of said jacket (1).

8. A freezing drum according to claim 7, characterised in that it comprises at least a welding spot (10) between the edge of said strip (3) and the external surface of said chamber (2) in the vicinity of said flange (7).

9. A freezing drum according to claim 7, characterised in that it comprises at least a welding spot (8) between one end of said strip (3) and the surface of said flange (7).

10. A freezing drum according to any of the claims 7 to 9, characterised in that it comprises at least a welding spot (11) between said strip (3) and said chamber (2) in the vicinity of the opposite end in respect to the one provided with flange (7).

11. A freezing drum according to any of the claims 7 to 10, characterised in that said freezing chamber (2) has rough external surface.

12. A freezing drum according to claim 11, characterised in that the external surface of said chamber (2) is knurled.

13. A freezing drum according to claim 11, characterised in that the external surface of said chamber (2) is turned at quick pitch.

14. A freezing drum according to any of the claims 7 to 13, characterised in that said flange (7) is obtained by roller leveling of said chamber (2).

15. A device for the manufacture of a freezing drum with built-in evaporator according to the method of claims 1 to 6, of the type comprising: means to hold said cylindrical freezing chamber (2) and to make said chamber rotate around its own axis; means (23, 24, 25) to drive and stretch said metal strip (3), arranged on a block (26) movable along a direction parallel to the axis of said chamber (2) at a speed synchronised with the speed of rotation of the chamber (2) itself; means to vary the ratio between the speed of translation of said movable block and the speed of rotation of said chamber (2), said means determining the pitch of the helical winding; means (40, 41) to adjust the orientation of said movable block in respect to said freezing chamber (2) and to keep the correct alignment of said strip (3) in respect to said chamber (2) as a function of the pitch; and means (21, 22) to support a roll (20) of said strip (3) and allow it to be fed towards said movable block, characterised in that said means (23, 24, 25) to allow to drive and stretch said strip (3) comprise a couple of grooved rollers (23, 24) having reciprocally parallel axes and acting on the opposite edges of said strip (3) at different distances in respect to the contact point between said strip (3) and said chamber (2); and that the distance (I) between said axes is adjustable by translating at least one of said rollers along two reciprocally perpendicular directions (D1, D2) in order to adjust the pressure exerted on said strip (3).

16. A device according to claim 15, characterised in that said couple of grooved rollers (23, 24) is constituted by a main roller (24) capable of exerting pressure on said strip (3) against said chamber (2) and by a supporting roller (23) capable of providing a fulcrum point for said strip (3), said main roller (24) acting on the edge of said strip (3) that is opposite to the contact edge with said chamber (2) and in a point between said fulcrum point and said contact point of the strip (3) with said chamber (2).

## Patentansprüche

1. Ein Verfahren zur Herstellung einer Gefriertrommel mit eingebautem Verdunster, wobei die Gefriertrommel umfaßt, eine im wesentlichen zylindrische äußere Hülle (1), die aus Metall hergestellt ist, eine zylindrische Gefrierkammer (2), die ebenfalls aus Metall hergestellt ist, wobei die Gefrierkammer einen geringeren Durchmesser als die äußere Hülle (1) besitzt und innerhalb der äußeren Hülle in koaxialer Anordnung untergebracht ist, sowohl als auch mindestens ein helikales Band, das in dem Hohlraum zwischen der Hülle (1) und der Kammer (2) angeordnet ist, **gekennzeichnet** durch die folgenden Schritte:
- Bereitstellung eines Flansches (7) an einem Ende der zylindrischen Gefrierkammer (2) durch Auswalzen der Kammer (2);
- Aufziehen mindestens eines Metallstreifens (3) auf die Kammer (2) durch Verformung des Streifens von einer im wesentlichen rechtwinkeligen Ausrichtung in eine helikale Ausrichtung, in engen Kontakt Bringen des einen Endes des Streifens (3) mit der ungefurchten äußeren Oberfläche der Kammer (2); und
- Anordnen der thermisch ausgedehnten äußeren Hülle auf der Kammer-Streifen-Anordnung, um, sobald das Abkühlen begonnen hat, die Befestigung des Streifens (3) zwischen der äußeren Oberfläche der Kammer (2) und der inneren Oberfläche der Hülle (1) zu erreichen.

2. Ein Verfahren nach Anspruch 1, **dadurch gekennzeichnet**, daß der Streifen (3) vor seinem Aufziehen an der Kammer (2) in der Nähe des Flansches (7) mittels mindestens einem Schweißpunkt (10) zwischen dem Rand des Streifens (3) und der äußeren Oberfläche der Kammer befestigt wird.

3. Ein Verfahren nach Anspruch 1, **dadurch gekennzeichnet**, daß der Streifen vor seinem Aufziehen mittels mindestens einem Schweißpunkt (8) zwischen dem Ende des Streifens (3) und der Oberfläche des Flansches an dem Flansch (7) befestigt wird.

4. Ein Verfahren nach einem der vorigen Ansprüche, **dadurch gekennzeichnet**, daß der Streifen (3) am Ende des Aufziehvorganges mittels mindestens einem Schweißpunkt (11) an die äußere Oberfläche der Kammer (2) in der Nähe des Endes, das dem mit dem Flansch ausgestatteten Ende gegenüberliegt, befestigt wird.

5. Ein Verfahren nach einem der vorigen Ansprüche, **dadurch gekennzeichnet**, daß es ein Aufrauhen der äußeren Oberfläche der Kammer (2) vor dem Aufziehen des Streifens (3) umfaßt.

6. Ein Verfahren nach Anspruch 5, **dadurch gekennzeichnet**, daß die Verarbeitung ein Riffeln oder ein schnelles Drehen ist.

7. Eine Gefriertrommel des Typs mit eingebautem Verdunster, umfassend eine im wesentlichen zylindrische äußere Hülle (1), die aus Metall hergestellt ist, eine zylindrische Gefrierkammer (2), die ebenfalls aus Metall hergestellt ist, die einen kleineren Durchmesser als die äußere Hülle (1) besitzt und innerhalb der Hülle in koaxialer Anordnung untergebracht ist, einen Flansch (7), der an einem Ende der Kammer (2) angebracht ist, sowohl als auch mindestens ein helikales Band, das in dem Hohlraum zwischen der Hülle (1) und der Kammer (2) bereitgestellt wird, **dadurch gekennzeichnet**, daß die Kammer (2) und der Flansch (7) aus einem einzigen Teil bestehen und, daß das helikale Band durch mindestens einen Metallstreifen (3) definiert ist, der auf die ungefurchte Oberfläche der Kammer (2) aufgezogen ist, wobei ein Ende in engem Kontakt mit dieser steht und das gegenüberliegende Ende in engem Kontakt mit der inneren Oberfläche der Hülle (1) steht.

8. Eine Gefriertrommel nach Anspruch 7, **dadurch gekennzeichnet**, daß sie mindestens einen Schweißpunkt (10) zwischen dem Rand des Streifens (3) und der äußeren Oberfläche der Kammer (2) in der Nähe des Flansches (7) umfaßt.

9. Eine Gefriertrommel nach Anspruch 7, **dadurch gekennzeichnet**, daß sie mindestens einen Schweißpunkt (8) zwischen einem Ende des Streifens (3) und der Oberfläche des Flansches (7) umfaßt.

10. Eine Gefriertrommel nach einem der Ansprüche 7 bis 9, **dadurch gekennzeichnet**, daß sie mindestens einen Schweißpunkt (11) zwischen dem Streifen (3) und der Kammer (2) in der Nähe des Endes, das dem mit dem Flansch versehenen Ende gegenüberliegt, umfaßt.

11. Eine Gefriertrommel nach einem der Ansprüche 7 bis 10, **dadurch gekennzeichnet**, daß die Gefrierkammer (2) eine rauhe äußere Oberfläche besitzt.

12. Eine Gefriertrommel nach Anspruch 11, **dadurch gekennzeichnet**, daß die äußere Oberfläche der Kammer (2) geriffelt ist.

13. Eine Gefriertrommel nach Anspruch 11, **dadurch gekennzeichnet**, daß die äußere Oberfläche der Kammer (2) mit hoher Umdrehung gedreht ist.

14. Eine Gefriertrommel nach einem der Ansprüche 7 bis 13, **dadurch gekennzeichnet**, daß der Flansch (7) durch Auswalzen der Kammer (2) erhalten wird.

15. Eine Vorrichtung zur Herstellung einer Gefriertrommel mit eingebautem Verdunster gemäß dem Verfahren der Ansprüche 1 bis 6 von der Art umfassend: Mittel, um die zylindrische Kammer (2) zu halten und die Kammer um ihre eigene Achse rotieren zu lassen; Mittel (23, 24, 25), um den Metallstreifen (3) zu führen und auszuziehen, die auf einem Block (26) angeordnet sind, wobei er entlang der Richtung beweglich ist, die parallel zur Achse der Kammer (2) angeordnet ist und sich mit der Geschwindigkeit bewegt, die mit der Rotation der Kammer (2) selbst synchronisiert ist; Mit: tel, um das Verhältnis zwischen der Geschwindigkeit der Translationsbewegung des beweglichen Blockes und der Drehgeschwindigkeit der Kammer (2) zu verändern, wobei die Mittel die Neigung der helikalen Windung bestimmen; Mittel (40, 41), um die Ausrichtung des beweglichen Blockes bezüglich der Gefrierkammer (2) anzupassen und die korrekte Ausrichtung in einer Linie des Streifens (3) bezüglich der Kammer (2) als Funktion der Neigung zu halten; und Mittel (21, 22), um eine Rolle (20) des Streifens (3) zu tragen und diesem dem beweglichen Block zuzuführen, **dadurch gekennzeichnet**, daß die Mittel (23, 24, 25), die den Streifen (3) führen und dehnen, ein Paar gefurchte Rollen (23, 24) umfassen, die umgekehrt parallele Achsen besitzen und auf die gegenüberliegenden Ränder des Streifens (3) an unterschiedlichen Abständen bezüglich des Berührungspunktes zwischen dem Streifen (3) und der Kammer (2) wirken; und daß der Abstand (I) zwischen den Achsen durch Übersetzung von zumindest einer der Rollen entlang zweier umgekehrt rechtwinkeliger Orientierungen (D1, D2) anpaßbar ist, um den auf den Streifen ausgeübten Druck anzupassen.

16. Eine Vorrichtung nach Anspruch 15, **dadurch gekennzeichnet**, daß das Paar gefurchter Rollen (23, 24) aus einer Hauptrolle (24) besteht, die in der Lage ist, einen Druck auf den Streifen (3) gegen die Kammer (2) auszuüben, und einer Trägerrolle (23) besteht, die in der Lage ist, einen Drehpunkt für den Streifen (3) zu liefern, wobei die Hauptrolle (24) auf den Rand des Streifens (3) wirkt, der gegenüber dem Berührungsrand mit der Kammer (2) liegt und in einem Punkt zwischen dem Drehpunkt und Berührungspunkt des Streifens (3) mit der Kammer (2) liegt.

## Revendications

1. Procédé de fabrication d'un tambour de congélation à évaporateur incorporé, ledit tambour de congélation comprenant une chemise extérieure sensiblement cylindrique (1) en métal, une chambre de congélation cylindrique (2), également en métal,ayant un diamètre plus petit que celui de ladite chemise extérieure (1) et logée en position coaxiale à l'intérieur de la dite chemise, ainsi qu'au moins un chemin hélicoïdal prévu dans l'espace creux entre ladite chemise (1) et ladite chambre (2), caractérisé par les étapes de :
formation d'une bride (7) à une extrémité de la chambre de congélation cylindrique (2), par repoussage au rouleau de ladite chambre (2) ;
enroulement d'au moins une bande métallique (3) sur ladite chambre (2) par déformation de ladite bande d'une configuration sensiblement rectiligne à une configuration hélicoïdale, et amenée d'un bord de ladite bande (3) en contact serré avec la surface extérieure non rainurée de ladite chambre (2) ; et
mise en place de ladite chemise extérieure (1), thermiquement dilatée, sur l'ensemble chambre-bande pour obtenir, après refroidissement, la fixation de la dite bande (3) entre la surface extérieure de ladite chambre (2) et la surface intérieure de ladite chemise (1).

2. Procédé selon la revendication 1, caractérisé en ce que ladite bande (3), avant son enroulement, est fixée à ladite chambre (2) au voisinage de la dite bride (7) au moyen d'au moins un point de soudure (10) entre le bord de ladite bande (3) et la surface extérieure de ladite chambre (2).

3. Procédé selon la revendication 1, caractérisé en ce que ladite bande (3), avant son enroulement, est fixée à ladite bride (7) au moyen d'au moins un point de soudure (8) entre l'extrémité de ladite bande (3) et la surface de ladite bride (7).

4. Procédé selon une quelconque des revendications précédentes, caractérisé en ce que ladite bande (3), à la fin de l'opération d'enroulement, est fixée au moyen d'au moins un point de soudure (11) à la surface extérieure de ladite chambre (2) au voisinage de l'extrémité opposée à celle qui est pourvue de la bride (7).

5. Procédé selon une quelconque des revendications précédentes, caractérisé en ce qu'il comprend un usinage de dépolissage de la surface extérieure de la dite chambre (2) avant l'enroulement de ladite bande (3).

6. Procédé selon la revendication 5, caractérisé en ce que ledit usinage est une opération de moletage ou de tournage rapide.

7. Tambour de congélation du type à évaporateur incorporé, comprenant une chemise extérieure sensiblement cylindrique (1) en métal, une chambre de congélation cylindrique (2), également en métal, ayant un diamètre plus petit que celui de ladite chemise extérieure (1) et logée en position coaxiale à l'intérieur de ladite chemise , une bride (7) placée à une extrémité de ladite chambre (2), ainsi qu'au moins un chemin hélicoïdal défini dans l'espace creux entre ladite chemise (1) et ladite chambre (2), caractérisé en ce que la dite chambre (2) et ladite bride (7) sont en une seule pièce, et en ce que ledit chemin hélicoïdal est défini par au moins une bande de métal (3) enroulée sur la surface extérieure non rainurée de ladite chambre (2), un bord de la bande étant étroitement en contact avec cette surface et le bord opposé étant étroitement en contact avec la surface intérieure de ladite chemise (1).

8. Tambour de congélation selon la revendication 7, caractérisé en ce qu'il comprend au moins un point de soudure (10) entre le bord de ladite bande (3) et la surface extérieure de ladite chambre (2) au voisinage de ladite bride (7).

9. Tambour de congélation selon la revendication 7, caractérisé en ce qu'il comprend au moins un point de soudure (8) entre une extrémité de ladite bande (3) et la surface de ladite bride (7).

10. Tambour de congélation selon une quelconque des revendications 7 à 9, caractérisé en ce qu'il comprend au moins un point de soudure (11) entre ladite bande (3) et ladite chambre (2) au voisinage de l'extrémité opposée à celle qui est pourvue de la bride (7).

11. Tambour de congélation selon une quelconque des revendications 7 à 10, caractérisé en ce que ladite chambre de congélation (2) présente une surface extérieure rugueuse.

12. Tambour de congélation selon la revendication 11, caractérisé en ce que la surface extérieure de ladite chambre (2) est moletée.

13. Tambour de congélation selon la revendication 11, caractérisé en ce que la surface extérieure de ladite chambre (2) est usinée par tournage à un pas rapide.

14. Tambour de congélation selon une quelconque des revendications 7 à 13, caractérisé en ce que ladite bride (7) est obtenue par repoussage au rouleau de ladite chambre (2).

15. Dispositif pour la fabrication d'un tambour de congélation à évaporateur incorporé selon le procédé des revendications 1 à 6, du type comprenant :
des moyens de maintien de ladite chambre de congélation cylindrique (2) et de mise en rotation de la dite chambre autour de son propre axe ;
des moyens (23,24,25) pour entraîner et étirer ladite bande de métal (3), disposée sur un bloc (26) déplaçable le long d'une direction parallèle à l'axe de ladite chambre (2) à une vitesse synchronisée avec la vitesse de rotation de la chambre (2) elle-même ;
des moyens de modification du rapport entre la vitesse de translation dudit bloc déplaçable et la vitesse de rotation de ladite chambre (2), lesdits moyens déterminant le pas de l'enroulemnet hélicoïdal ;
des moyens (40,41) de réglage de l'orientation dudit bloc déplaçable par rapport à ladite chambre de congélation (2) et de maintien de l'alignement correct de ladite bande (3) par rapport à ladite chambre (2) en fonction du pas ; et
des moyens (21,22) pour supporter une bobine (20) de ladite bande (3) et permettre l'avance de la bande vers ledit bloc déplaçable ;
caractérisé en ce que :
lesdits moyens (23,24,25) permettant l'entraînement et l'étirage de ladite bande (3) comprennent une paire de rouleaux rainurés (23,24) ayant des axes mutuellement parallèles,agissant sur les bords opposés de la dite bande (3) à des distances différentes par rapport au point de contact entre ladite bande (3) et ladite chambre (2) ; et
la distance (I) entre lesdits axes est réglable par translation d'au moins un desdits rouleaux le long de deux directions mutuellement perpendiculaires (D1,D2) afin de régler la pression exercée sur ladite bande (3).

16. Dispositif selon la revendication 15, caractérisé en ce que ladite paire de rouleaux rainurés (23,24) est constituée par un rouleau principal (24), pouvant exercer une pression sur ladite bande (3) contre ladite chambre (2) et par un rouleau d'appui (23) pouvant servir de point d'appui pour ladite bande (3), ledit rouleau principal (24) agissant sur le bord de ladite bande (3) qui est à l'opposé du bord de contact avec ladite chambre (2) et en un point situé entre ledit point d'appui et ledit point de contact de la bande (3) avec ladite chambre (2).
